(19) Europäisches Patentamt
European Patent Office
Office européen des brevets

(11) **EP 3 470 905 A1**

(12) **EUROPEAN PATENT APPLICATION**

(43) Date of publication:
**17.04.2019 Bulletin 2019/16**

(51) Int Cl.:
**G02B 9/64** (2006.01)   **G02B 13/06** (2006.01)
**G02B 7/02** (2006.01)   **G02B 9/62** (2006.01)

(21) Application number: **18199394.0**

(22) Date of filing: **09.10.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.10.2017   CN 201710934254**
**16.07.2018   US 201816035845**

(71) Applicant: **Shanghai Xiaoyi Technology Co., Ltd.**
**Shanghai 201203 (CN)**

(72) Inventors:
• **NAKAMURA, Akira**
**Shanghai, 201203 (CN)**
• **WU, Wanghu**
**Shanghai, 201203 (CN)**
• **TANG, Pingyu**
**Shanghai, 201203 (CN)**
• **JI, Peng**
**Shanghai, 201203 (CN)**

(74) Representative: **Finnegan Europe LLP**
**1 London Bridge**
**London SE1 9BG (GB)**

(54) **FISHEYE LENS**

(57)   Embodiments of the disclosure provide a fisheye lens. The fisheye lens can include a first lens group (G1) near an object side, a second lens group (G2) near an imaging plane (X1), and an aperture diaphragm (D1) disposed between the first and second lens groups. The first lens group can include, disposed sequentially from the object side to the imaging plane, a negative meniscus spherical first lens (L1), an aspherical second lens (L2), and an aspherical third lens (L3). The second lens group can include, disposed sequentially from the object side to the imaging plane, a positive meniscus spherical fourth lens (L4), a fifth lens (L5) formed of a positive biconvex spherical lens and a negative biconcave spherical lens, and an aspherical sixth lens (L6).

FIG. 1

**Description**

## TECHNICAL FIELD

This disclosure relates to the field of optical lens technology, and more particularly to a fisheye lens.

## BACKGROUND

Smart Internet hardware continues to develop and expand. Particularly, as panoramic photography, panoramic dash cam, and virtual reality technologies continue to develop, the demand for ultra-wide-angle optical lenses with high-quality, low-cost, and wide apertures is growing. Further, as the market demand continues to heat up, smart hardware companies emerge and competition among them intensifies. Increasing production throughput yield, lowering costs, and increasing value-to-cost ratios are all important means by which to maintain competitive advantage.

However, with conventional technology, the imaging quality of fisheye lenses is poor. For example, the resulting images of the conventional fisheye lenses have low clarity, and such images do not attain uniform quality along the peripheries of these images.

## SUMMARY

To resolve the technical problem discussed above, embodiments of this disclosure provide a fisheye lens. The fisheye lens can include a first lens group near an object side, a second lens group near an imaging plane, and an aperture diaphragm disposed between the first and second lens groups. The first lens group includes, disposed sequentially from the object side to the imaging plane, a negative meniscus spherical first lens, an aspherical second lens, and an aspherical third lens. A concave surface of the first lens faces the imaging plane, and the convex surface of the first lens faces the object side, a surface of greater curvature of the second lens faces the object side, and a surface of lesser curvature of the second lens faces the imaging plane. The concave surface of the third lens faces the object side, and a convex surface of the third lens faces the imaging plane. The second lens group includes, disposed sequentially from the object side to the imaging plane, a positive meniscus spherical fourth lens, a fifth lens formed of a positive biconvex spherical lens and a negative biconcave spherical lens, and an aspherical sixth lens. A concave surface of the fourth lens faces the object side, and a convex surface of the fourth lens faces the imaging plane. A concave surface of the fifth lens faces the imaging plane, and a convex surface of the fifth lens faces the object side. A convex surface of the sixth lens include a protruding installation ring facing the object side, and a convex surface of the sixth lens include a flat installation platform facing the imaging plane.

With this configuration, the fisheye lens can, during image formation, effectively correct lens optical aberrations and reduce the sensitivity of the optical system. Additionally, the use of the aspherical second, third, and sixth lenses can increase the clarity of the resulting image and the uniformity of its periphery, thus better reconstructing the scene and enhancing the imaging quality of the lens.

Furthermore, the second lens, the third lens, and the sixth lens are plastic aspherical lenses. The use of multiple plastic aspherical lenses can greatly reduce fisheye lens production costs because molded plastic aspherical lenses can be produced with a higher throughput yield than glass aspherical lenses given the same processing precision requirement.

In some example embodiments, there is provided a fisheye lens, which comprises a first lens group near the object side, a second lens group near the image plane, and an aperture diaphragm configured between the first and second lens groups; wherein: the first lens group comprises, sequentially from the object side to the image plane, a negative meniscus spherical first lens, an aspherical second lens, and an aspherical third lens; the concave surface of the first lens faces the image plane, and the convex surface of the first lens faces the object side; the surface of greater curvature of the second lens faces the object side, and the surface of lesser curvature of the second lens faces the image plane; the concave surface of the third lens faces the object side, and the convex surface of the third lens faces the image plane; the second lens group comprises, sequentially from the object side to the image plane, a positive meniscus spherical fourth lens, a fifth lens formed of a positive biconvex spherical lens and a negative biconcave spherical lens, and an aspherical sixth lens; the concave surface of the fourth lens faces the object side, and the convex surface of the fourth lens faces the image plane; the concave surface of the fifth lens faces the image plane, and the convex surface of the fifth lens faces the object side; the convex surface of the sixth lens with a protruding installation ring faces the object side, and the convex surface of the sixth lens with a flat installation platform faces the image plane.

Optionally, the second lens, the third lens, and the sixth lens are glass aspherical lenses or plastic aspherical lenses.

Optionally, the second lens, the third lens, and the sixth lens are aspherical lenses that all satisfy the following formula: $Z = y^2/\{1 + [1 - (1 + k)c^2y^2]^{1/2}\} + a_1y^4 + a_2y^6 + a_3y^8 + a_4y^{10} + a_5y^{12} + a_6y^{14}$, where Z represents the aspherical surface, c is the curvature of the aspherical surface, y is the radial coordinate, k is the aspherical surface type coefficient, and $a_1$, $a_2$, $a_3$, $a_4$, $a_5$, and $a_6$ are the radial coefficients.

Optionally, the first lens, the fourth lens, and the fifth lens are glass spherical lenses.

Optionally, the fifth lens is formed by adhesion of the positive biconvex spherical lens with the negative biconcave spherical lens.

Optionally, the fifth lens is formed by close placement of the positive biconvex spherical lens with the negative biconcave spherical lens.

Optionally, the size of the aperture of the aperture diaphragm is either fixed or adjustable.

Optionally, the fisheye lens also comprises a filter, and the filter uses an IR film coating or dual filters to block infrared light.

Compared to conventional technology, the technical solution provided by example embodiments of the present invention provides the following benefits:

In the above described configurations, the fisheye lens that comprises the first lens group near the object side and the second lens group near the image plane is able, at the time of image formation, to effectively correct lens optical aberrations and reduce the sensitivity of the optical system. Additionally, the use of the aspherical second, third, and sixth lenses helps to increase the clarity of the resulting image and the uniformity of its periphery, thus better reconstructing the scene and enhancing the imaging quality of the lens.

Furthermore, the use of multiple plastic aspherical lenses greatly reduces fisheye lens production costs because molded plastic aspherical lenses can be produced with a higher throughput yield than glass aspherical lenses given the same processing precision requirement.

## BRIEF DESCRIPTION OF THE DRAWINGS

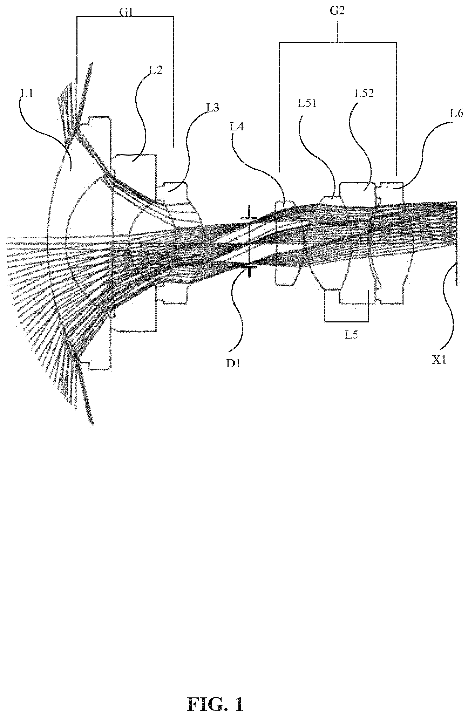

**FIG. 1** is a structural diagram illustrating an exemplary fisheye lens, according to embodiments of the disclosure.

## DETAILED DESCRIPTION

To make the aforementioned purpose, characteristics, and advantages of the present invention more evident and easier to understand, detailed descriptions are provided below on specific example embodiments in reference to the drawing attached.

**FIG. 1** is a structural diagram illustrating an exemplary fisheye lens, according to embodiments of the disclosure.

The fisheye lens illustrated in **FIG. 1** may include a first lens group G1 near an object side, a second lens group G2 near the imaging plane X1, and an aperture diaphragm D1 disposed between the first and second lens groups.

The first lens group G1 can include, disposed sequentially from the object side (not shown in the drawing) to the imaging plane X1, a negative meniscus spherical first lens L1, an aspherical second lens L2, and an aspherical third lens L3. A concave surface of the first lens L1 can face the imaging plane X1, and a convex surface of the first lens L1 can face the object side. The surface with greater curvature of the second lens L2 faces the object side, and the surface with lesser curvature of the second lens L2 faces the imaging plane X1. The concave surface of the third lens L3 faces the object side, and the convex surface of the third lens L3 faces the imaging plane X1.

The second lens group G2 can include, disposed sequentially from the object side to the imaging plane, a positive meniscus spherical fourth lens L4, a fifth lens L5 formed of a positive biconvex spherical lens L51 and a negative biconcave spherical lens L52, and an aspherical sixth lens L6. The concave surface of the fourth lens L4 can face the object side, and the convex surface of the fourth lens L4 can face the imaging plane X1. The concave surface of the fifth lens L5 can face the imaging plane X1, and the convex surface of the fifth lens L5 can face the object side. The convex surface of the sixth lens L6 with a protruding installation ring can face the object side, and the convex surface of the sixth lens L6 with a flat installation platform can face the imaging plane X1. For example, with reference to **FIG. 1,** a protruding installation ring of the sixth lens L6 is attached to negative biconcave spherical lens L52.

The fisheye lens according to embodiments of the present disclosure may be used on 4K-resolution video camera platforms. By a combination of the first lens L1 through the sixth lens L6, the fisheye lens can, during image formation, effectively correct lens optical aberrations and reduce the sensitivity of the optical system, thus achieving a higher resolution and greater stability while better adapted for 4K sensors.

In some embodiments, the aperture diaphragm D1 can be disposed between the first lens group G1 and the second lens group G2. The aperture diaphragm D1 can be spaced from the third lens L3 of the first lens group G1 and the fourth lens L4 of the second lens group G2 by predetermined distances. The numerical values of the distances may be configured according to actual application.

In some embodiments, the size of the aperture of the aperture diaphragm is either fixed or adjustable. For example, an aperture diaphragm with adjustable aperture size may have an aperture that is mechanically or electronically adjustable.

In some embodiments of this disclosure, the fifth lens L5 can be formed by adhesion of the positive biconvex spherical lens L51 with the negative biconcave spherical lens L52.

In some embodiments, the fifth lens L5 is a compound lens joined by adhesive. For example, the fifth lens L5 can be formed by adhesion of the positive biconvex spherical lens L51 with the negative biconcave spherical lens L52. The fifth lens L5 can reduce chromatic aberration and further enhance the imaging quality of the fisheye lens.

In some embodiments of this disclosure, the fifth lens L5 is formed by close placement of the positive biconvex spherical lens L51 with the negative biconcave spherical lens L52.

In some embodiments, the close placement of the positive biconvex spherical lens L51 and the negative biconcave spherical lens L52 can reduce the difficulty of production of the fisheye lens and raise throughput yield.

In some embodiments of this disclosure, the second lens L2, the third lens L3, and the sixth lens L6 are plastic aspherical lenses.

In some embodiments, the plastic material has the characteristics of high plasticity, high transmittance, and high temperature resistance. And, the precision of its manufacturing and throughput yield is improved. Therefore, plastic lens material, particularly as used for high-precision plastic aspherical lenses, not only can enhance the lenses' imaging quality, but can also enhance the manufacturing throughput yield and thereby decrease the production costs of the lens module.

Alternatively, the second lens L2, the third lens L3, and the sixth lens L6 may also be glass aspherical lenses.

In some embodiments, the first lens L1, the fourth lens L4, and the fifth lens L5 are glass spherical lenses. Because glass lenses accommodate a wide range of optical parameters and have high transmittance and high temperature resistance, the use of glass spherical lenses can enhance the imaging quality of the fisheye lens.

In some embodiments, the fisheye lens illustrated in **FIG. 1** can further include a filter (not shown in **FIG. 1**), and the filter uses an IR (infrared) film coating or dual filters to block infrared light.

The filter can filter and block ambient light. For example, an IR film can be coated on the filter to block the ambient light, or dual filters can be used to block the ambient light. When dual filters are being used, the fisheye lens can include dual filters accordingly. For example, one filter can be an infrared blocking filter or an absorption filter, and the other one can be a full spectrum filter.

In some embodiments of this disclosure, aspherical lenses of the second lens L2, the third lens L3, and the sixth lens L6 each satisfies the following formula:

$$Z = y^2/\{1 + [1 - (1+k)c^2y^2]^{1/2}\} + a_1y^4 + a_2y^6 + a_3y^8 + a_4y^{10} + a_5y^{12} + a_6y^{14},$$

where Z represents the aspherical surface, c represents the curvature of the aspherical surface, y represents the radial coordinate, k represents the aspherical surface type coefficient, and $a_1$, $a_2$, $a_3$, $a_4$, $a_5$, and $a_6$ are the radial coefficients.

When the aspherical surface type coefficient is less than -1 (i.e., k<-1), the aspherical surface Z is hyperbolic. When the aspherical surface type coefficient equals -1 (i.e., k = -1), the aspherical surface Z is parabolic. When the aspherical surface type coefficient is less than 0 but greater than -1 (i.e., 0> k > -1), the aspherical surface Z is elliptic. When the aspherical surface type coefficient equals 0 (i.e., k = 0), the aspherical surface Z is spherical. When the aspherical surface type coefficient is greater than 0 (i.e., k > 0), the aspherical surface is oblate elliptic. The parameters above can precisely set the shape and size of the two aspherical surfaces of a lens.

Table 1 shows all of the coefficients corresponding to the aspherical lenses in one specific application scenario of this disclosure.

Table 1

| Coefficient | Second lens L2 | | Third lens L3 | | Sixth lens L6 | |
|---|---|---|---|---|---|---|
| | S3 | S4 | S5 | S6 | S13 | S14 |
| k | 0 | 0 | 0 | 0 | 0 | 0 |
| a1 | 7.01E-03 | -4.10E-04 | -7.91E-03 | 7.31E-04 | -5.76E-03 | 1.21E-02 |
| a2 | -5.90E-04 | 1.20E-03 | 1.81E-03 | 5.34E-04 | -1.12E-04 | -1.21E-03 |
| a3 | 2.62E-05 | -1.10E-04 | -4.33E-04 | -1.21E-04 | 1.91E-05 | 7.12E-05 |
| a4 | -4.55E-07 | -2.35E-05 | 4.61E-05 | 1.33E-05 | 7.80E-06 | 1.16E-05 |
| a5 | 0 | 0 | 0 | 0 | 0 | 0 |
| a6 | 0 | 0 | 0 | 0 | 0 | 0 |

Surface S3 is a surface of the second lens L2 that is close to the object side, and surface S4 is a surface of the second lens L2 that is close to imaging plane X1. Surface S5 is a surface of the third lens L3 that is close to the object side, and surface S6 is a surface of the third lens L3 that is close to imaging plane X1. Surface S13 is a surface of the sixth lens L6 that is close to the object side, and surface S14 is the surfaces of the sixth lens L6 that is close to imaging plane X1.

It is appreciated that the values of the coefficients shown in Table 1 are illustrative only and do not constitute limitations to embodiments of this disclosure. All of the aspherical surface coefficients can be configured and adjusted to adapt to actual application environments.

The lens surface parameters for the first lens L1, second lens L2, third lens L3, fourth lens L4, fifth lens L5, and sixth lens L6 are shown in Table 2.

Table 2

| Surface number | Type | Radius | Thickness | Refractive index (Nd) | Dispersion (Vd) | Semi-diameter |
|---|---|---|---|---|---|---|
| OBJ | Object plane | 400 | 400 | | | |
| S1 | Spherical surface | 13.502 | 1 | 1.9108 | 35.25 | 6.2 |
| S2 | Spherical surface | 4.486 | 2.34 | | | 3.8 |
| S3 | Aspherical surface | -17.983 | 0.8 | 1.54 | 56 | 3.5 |
| S4 | Aspherical surface | 2.6021 | 2.32 | | | 2.2 |
| S5 | Aspherical surface | -4.6401 | 1.424 | 1.661 | 20.34 | 2.02 |
| S6 | Aspherical surface | -3.4511 | 2.1422 | | | 2.13 |
| S7 | Aperture diaphragm | Infinity | 1.34 | | | 1.08 |
| S8 | Spherical surface | -25.196 | 1.3556 | 1.883 | 40.79 | 1.63 |
| S9 | Spherical surface | -4.821 | 0.1 | | | 1.89 |
| S10 | Spherical surface | 4.0921 | 2.2086 | 1.497 | 81.61 | 2.01 |
| S11 | Spherical surface | -6.2015 | 0.8 | 1.946 | 17.94 | 1.85 |
| S12 | Spherical surface | 5.552 | 0.1 | | | 1.83 |
| S13 | Aspherical surface | 4.1621 | 2.14 | 1.54 | 56 | 1.93 |
| S14 | Aspherical surface | -3.7716 | 0.5 | | | 2.14 |
| Image | Imaging plane | infinity | 0 | | | 2.19 |

As shown in Table 2, surface S1 is a surface of the first lens L1 that is close to the object side, and surface S2 is a surface of the lens L1 that is close to imaging plane X1. Surface S3 is a surface of the second lens L2 that is close to the object side, and surface S4 is a surface of the second lens L2 that is close to imaging plane X1. Surface S5 is a surface of the third lens L3 that is close to the object side, and surface S6 is a surface of the third lens L that is close to imaging plane X1. Surface S8 is a surface of the fourth lens L4 that is close to the object side, and surface S9 is a surface of the fourth lens L4 that is close to imaging plane X1.

As discussed above, the fifth lens L5 can be formed by adhesion of the positive biconvex spherical lens L51 with the negative biconcave spherical lens L52. Therefore, the fifth lens L5 can include three surfaces. The three surfaces can include a surface of spherical lens L51, a surface formed by the spherical lens L51 with the spherical lens L52, and a surface of the spherical lens L52. With reference to Table 2, the three surfaces can be surface S10, surface S11, and surface S12, respectively.

Surface S13 is the surface of the sixth lens L6 that is close to the object side, and surface S14 is the surface of the sixth lens L6 that is close to imaging plane X1.

The radius parameter can express the curvature of the lens, and the semi-diameter parameter can express the outer lens diameter.

It is appreciated that the values of all the parameters shown in Table 2 are illustrative only and do not constitute limitations to embodiments of this disclosure.

Notwithstanding the above disclosure of the present invention, it does not restrict the present invention. Any person of skill in the art may make various alterations and changes that are not detached from the scope of the present invention; therefore, the scope of protection for the present invention should be that as defined by the claims.

## Claims

1. A fisheye lens, comprising a first lens group (G1) near an object side, a second lens group (G2) near an imaging plane (X1), and an aperture diaphragm (D1) disposed between the first and second lens groups, wherein

    the first lens group (G1) comprises, disposed sequentially from the object side to the imaging plane (X1), a negative meniscus spherical first lens (L1), an aspherical second lens (L2), and an aspherical third lens (L3);

    a concave surface of the first lens (L1) faces the imaging plane (X1), and a convex surface of the first lens (L1) faces the object side;

    a surface with greater curvature of the second lens (L2) faces the object side, and a surface with less curvature of the second lens (L2) faces the imaging plane (X1);

    a concave surface of the third lens (L3) faces the object side, and a convex surface of the third lens (L3) faces the imaging plane (X1);

    the second lens group (G2) comprises, disposed sequentially from the object side to the imaging plane (X1), a positive meniscus spherical fourth lens (L4), a fifth lens (L5) formed of a positive biconvex spherical lens and a negative biconcave spherical lens, and an aspherical sixth lens (L6);

    a concave surface of the fourth lens (L4) faces the object side, and a convex surface of the fourth lens (L4) faces the imaging plane (X1);

    a concave surface of the fifth lens (L5) faces the imaging plane (X1), and a convex surface of the fifth lens (L5) faces the object side; and

    a convex surface of the sixth lens (L6) includes a protruding installation ring facing the object side, and a convex surface of the sixth lens (L6) includes a flat installation platform facing the imaging plane (X1).

2. The fisheye lens according to claim 1, wherein the second lens (L2), the third lens (L3), and the sixth lens (L6) are glass aspherical lenses or plastic aspherical lenses.

3. The fisheye lens according to claim 2, wherein the aspherical lenses of the second lens (L2), the third lens (L3), and the sixth lens (L6) each satisfies the following formula:

$$Z = y^2/\{1 + [1 - (1 + k)c^2 y^2]^{1/2}\} + a_1 y^4 + a_2 y^6 + a_3 y^8 + a_4 y^{10} + a_5 y^{12} + a_6 y^{14},$$

    where Z represents an aspherical surface, c represents the curvature of the aspherical surface, y represents a radial coordinate, k represents an aspherical surface type coefficient, and $a_1$, $a_2$, $a_3$, $a_4$, $a_5$, and $a_6$ are radial coefficients.

4. The fisheye lens according to any of claims 1 to 3, wherein the first lens (L1), the fourth lens (L4), and the fifth lens (L5) are glass spherical lenses.

5. The fisheye lens according to any of claims 1 to 4, wherein the fifth lens (L5) is formed by adhesion of the positive biconvex spherical lens with the negative biconcave spherical lens.

6. The fisheye lens according to any of claims 1 to 4, wherein the fifth lens (L5) is formed by close placement of the positive biconvex spherical lens with the negative biconcave spherical lens.

7. The fisheye lens according to any of claims 1 to 6, wherein a size of an aperture of the aperture diaphragm is fixed.

8. The fisheye lens according to any of claims 1 to 6, wherein a size of an aperture of the aperture diaphragm is adjustable.

9. The fisheye lens according to any of claims 1 to 7, further comprising a filter, wherein the filter uses an infrared film coating to block infrared light.

10. The fisheye lens according to any of claims 1 to 7, further comprising a filter, wherein the filter uses dual filters to block infrared light.

11. The fisheye lens according to claim 10, wherein the dual filters comprise an infrared blocking filter or an absorption filter, and a full spectrum filter.

**FIG. 1**

Europäisches
Patentamt

European
Patent Office

Office européen
des brevets

# EUROPEAN SEARCH REPORT

**Application Number**

EP 18 19 9394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2012/206822 A1 (HSIEH DUNG-YI [TW] ET AL) 16 August 2012 (2012-08-16) * paragraphs [0040] - [0078]; figures 1a,5a,6a * | 1-11 | INV. G02B9/64 G02B13/06 G02B7/02 G02B9/62 |
| Y | US 3 576 360 A (SHIMIZU YOSHIYUKI) 27 April 1971 (1971-04-27) * column 2, lines 9-25; figure 1 * | 1-4,6-11 | |
| Y | US 2014/211009 A1 (FÜRSICH MANFRED [DE]) 31 July 2014 (2014-07-31) * paragraph [0039]; figures 4,8,8a * | 1-11 | |
| Y | US 2007/139793 A1 (KAWADA MAYUMI [JP]) 21 June 2007 (2007-06-21) * paragraphs [0121] - [0131]; figures 17-18D * | 1-5,7-11 | |

TECHNICAL FIELDS
SEARCHED      (IPC)

G02B

The present search report has been drawn up for all claims

| Place of search | Date of completion of the search | Examiner |
|---|---|---|
| Munich | 14 February 2019 | Casse, Martin |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

.......................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 18 19 9394

This annex lists the patent family members relating to the patent documents cited in the above-mentioned European search report.
The members are as contained in the European Patent Office EDP file on
The European Patent Office is in no way liable for these particulars which are merely given for the purpose of information.

14-02-2019

| Patent document cited in search report | | Publication date | Patent family member(s) | | Publication date |
|---|---|---|---|---|---|
| US 2012206822 | A1 | 16-08-2012 | CN 102645727 A<br>CN 202008546 U<br>TW 201235731 A<br>US 2012206822 A1 | | 22-08-2012<br>12-10-2011<br>01-09-2012<br>16-08-2012 |
| US 3576360 | A | 27-04-1971 | DE 1810220 A1<br>FR 1604061 A<br>GB 1229227 A<br>US 3576360 A | | 18-09-1969<br>05-07-1971<br>21-04-1971<br>27-04-1971 |
| US 2014211009 | A1 | 31-07-2014 | NONE | | |
| US 2007139793 | A1 | 21-06-2007 | DE 102006019798 A1<br>JP 2007164079 A<br>US 2007139793 A1 | | 28-06-2007<br>28-06-2007<br>21-06-2007 |

EPO FORM P0459

For more details about this annex : see Official Journal of the European Patent Office, No. 12/82